# EUROPEAN PATENT SPECIFICATION

(11) **EP 0 835 292 B1**
(45) Date of publication and mention of the grant of the patent: **06.03.2002**
(21) Application number: 97920752.9
(22) Date of filing: 25.04.1997
(51) Int. Cl.: C09D 11/10, B41M 3/14

(54) **BLEEDING INK FOR PRINTING SECURITY DOCUMENTS**
AUSBLUTENDE TINTE ZUM DRUCKEN VON SICHERHEITSDOKUMENTE
ENCRE SOLUBLE POUR L'IMPRESSION DE DOCUMENTS DE SECURITE

(30) Priority: 29.04.1996 EP 96810274; 01.05.1996 EP 96810281
(43) Date of publication of application: 15.04.1998
(73) Proprietor: SICPA HOLDING S.A., 1008 Prilly (CH)
(72) Inventor: AMON, Philippe, CH-1005 Lausanne (CH); BLEIKOLM, Anton, CH-1024 Ecublens (CH); ROZUMEK, Olivier, CH-1609 St. Martin (CH); PAPADIMITRIOU, Pandelis, CH-1110 Morges (CH)
(74) Representative: Hepp, Dieter
(86) International application number: EP9702145
(87) International publication number: WO9741181

(56) References cited:
- EP-A- 0 432 093
- GB-A- 2 229 189
- US-A- 4 505 944

## Description

The present invention belongs to the field of the art of printing and describes a new and useful ink, a method of manufacturing an ink and the use of a composition as an ink which can be printed particularly by dry or wet offset by screen-, flexo- and gravure-printing as well as letterpress printing methods such as used mainly on security documents. Such inks are also named "fugitive inks".

A great number of security documents are presently known; examples of such documents are bank cheques, money transfer orders, identity cards, other identity documents such as passports and driver's licences, postal stamps, lottery tickets, airline transportation tickets, shares, certificates, affidavits and others.

All security documents should be protected against forgery or counterfeiting. The main threats are:

Total counterfeit where a document is reproduced in its entirety; or

Forgery where a document is altered by deleting and/or replacing information, for example the amount of money on a cheque, a signature on a driver's licence, or information on a passport.

In each case, a well selected security printing ink can contribute considerably to the security of the document.

Solvent bleeding printing inks are already known and have been used for a rather long time in the field of security inks. The protection conferred to the security document is established by a fading or even disappearance of the colour, by a change in colour or by a bleeding off when the document is contacted with an organic solvent or any other chemical substance used as a falsifying reagent.

GB 2 229 181 describes the use of photochromic dyes in a film forming ink composition in order to indicate counterfeiting by a change in colour. The dyes are embedded in a solid polymeric binder matrix created upon curing the binder compounds in the presence of the dye. The matrix-embedded dye is used as a pigment for conventional ink compositions. The chemically susceptible chromophores are thus protected from the detrimental influence of chemicals, especially from oxygen, and from being leached out by solvent.

This ink does not indicate counterfeiting attempts by analysing solvents on the document to modify the print or colour.

The application methods and the principles of the function of the bleeding or fugitive printing inks in contact with solvents and other chemical agents, are the following:

The inks can be printed specifically by dry or wet offset by screen-, flexo- and gravure-printing or by letterpress. They are composed of a vehicle or binder whose components are mineral oils and alkyd resins, one or more dyestuffs that are soluble in organic solvents and are the substances sensitive to said chemical agents, and different additives. The dyestuffs are mostly chromium complexes, cobalt complexes or copper phthalocyanine blue. The drying mechanism is a purely physical one and acts principally by penetration into an absorbing solid fibrous substrate. In fact, if drying is defined as a conversion of the liquid printing ink into a solid and stationary film on the substrate, these printing inks do not dry but remain "liquid"; however, they are sufficiently permanently entrapped within the interstices of the fibres of the substrate for their mobility to be drastically reduced. The absorption of such printing inks is partial and progressive, and several days after the printing are necessary for the printed document to show an apparently dry condition, typically 5 to 7 days. Only after that time can the printed substrate be further processed, for example in order to apply personalised information, i.e. by laser printer or ion deposition printer. Furthermore, the absorption capacity of the substrate determines the quality and the drying time.

Thus, the working principle of bleeding printing inks known to date is based on the fact that the matrix of the ink remains soluble in organic solvents and other chemical agents.

Now, the objective of the present invention is to provide printing inks for the above-mentioned printing processes that can be effectively dried to form a solid matrix but which also form a print that remains sensitive to solvents and other chemical reagents. Another objective of this invention is to provide bleeding security documents that will be at least in part printed with such inks.

The bleeding printing inks, printed layers, printed substrates, methods of making an ink composition of this invention which meet the objectives mentioned above are defined in the independent claims. The new use of an ink composition is also the subject matter of this invention. Special embodiments of the ink and the security documents are defined in the dependent claims.

The invention is based on the highly unexpected finding that it is possible to obtain a printing ink which bleeds in contact with organic solvents and other chemical reagents, this even if the formulation of the ink is based on a solid matrix which is formed when the liquid ink is transformed into a solid film on the substrate and wherein this solid film itself is resistant to said solvents and chemical reagents after drying. The condition necessary to obtain the required sensitivity to bleeding is the use of dyestuffs and colouring agents which are soluble in said solvents and chemical reagents. That is, the soluble dyestuff is attacked by the said solvents and/or reagents whereas the said matrix remains unaltered.

Manufacturing of the inks of the present invention rely on the dispersion of the dyestuffs in the binder matrix which results in an ink product wherein substantially homogeneously distributed dye molecules, dye molecule aggregates and substantially undissolved and also substantially homogeneously distributed dye particles may coexist. The extent to which the dye particles are dissolved depends mainly on the dye/binder system. Complete dye solution will strongly and positively impact on colour development and therefore on the tinctorial strength of the prints whereas undissolved dye particles will adversely affect these characteristics.

When brought into contact with a dried print performed with an ink of the invention, solvents and/or reagents will diffuse through the binder matrix and reach dye molecules and particles causing them respectively to be washed-off or dissolved, leading to the so-called "bleeding effect". It is the surprising experience of the inventors that, provided the dyestuff is soluble in the solvent or reagent, bleeding is necessarily observed.

The presence of porosities and defects in the dried ink film accounts probably much more for the penetration of the solvents or reagents than pure diffusion of molecules of the bleeding agent through the polymeric network formed upon curing of the binder matrix. A dried ink film whatever the printing technique used inevitably presents micro-defects and porosities of all kinds such as micro-voids, micro-cracks, bubbles and others wich are so many penetration paths for the bleeding agent.

Moreover, the roughness of the substrate may indirectly impact on the bleeding effect by disturbing the ink film structure and in situations where the ink film is very thin it will actually consist of discontinuous and unconnected areas more easily accessible to the solvents and the reagents than large and solid ink spots. This undoubtedly applies to an offset print on a standard cheque or bond paper where the 1 to 4 µm thick offset ink film is unable to compensate for the roughness of the substrate, the amplitude of which is at least 10 µm.

The binder matrix may also be made specifically porous. Porosity may be achieved by a variety of known techniques, such as using a solvent which evaporates and leaves micropores, by mixing incompatible compounds, by adding additives creating micropores and by other techniques.

The substantially homogeneous distribution of the dyestuff (molecules and/or aggregates and/or particles) in the binder matrix results in an ink layer containing substantially homogeneously distributed dyestuff. This results in dye molecules and/or aggregates and/or particles being distributed also on the surface or with very little coverage by the binder matrix which allows solvent to diffuse/reach the dye rather easily.

It is worthwhile to note that a poor colour development may favour a strong bleeding effect by reinforcing the contrast between untouched areas and those tested for bleeding.

Also of interest are all combinations between dyestuffs exhibiting a solubility in different solvents or reagents. This will provide tamper evidence against attempts made by using various chemicals and therefore reinforce the protection of the document against falsification.

Combinations of such dyestuffs and conventional pigments offer interesting possibilities as well. A violet obtained by combining a blue fugitive dye and a red resistant one will turn to red upon contact with a solvent or reagent able to dissolve and extract the blue dye thus making the fraud obvious.

This new type of bleeding inks brings about the same or better protective effects on security documents than known bleeding inks which, however, have the serious drawbacks described above. In addition, the compounds forming a solid matrix have been found to have better abrasion resistance.

The bleeding printing ink of the present invention can be printed on absorbing substrates but also on non-absorbing ones since it does not need to penetrate into the substrate in order to be dried or to acquire an apparently dry condition. This advantageous property allows the user to get a much broader choice of substrates to print upon than with known bleeding inks.

A further, most advantageous property which has already been mentioned before is the considerable diminution of time necessary from the moment of printing until the drying and any post-treatments to which the printed substrates are typically subjected. The existing bleeding inks need several days for drying, 5 to 7 on average, whereas the printing inks of this invention can be processed immediately after printing when they are formulated to dry by radiation energy such as UV light or electron beam, or after approximately 24 hours when they are dried by oxypolymerisation.

As it has already been mentioned above, the known bleeding printing inks contain a matrix or binder system which remains liquid and soluble in organic solvents and other chemical agents even after drying. In contrast thereto, the bleeding printing ink of the present invention forms a matrix on drying which becomes solid and resistant to chemical agents. In the cases where the printings are dried, i.e. cured or crosslinked under UV radiation or electron beam, the matrix is composed of a binder system containing one or more radiation curing compounds. These compounds form a matrix which is solid and resists to chemical products after a chemical polymerisation reaction initiated by said radiation.

Compounds which are cured or crosslinked by radiation are known to the specialised ink manufacturer. Mainly, these compounds are oligomers of high or low viscosity. In the case where they are highly viscous substances, they are blended with liquid radiation curable monomers acting as viscosity regulators. These monomers are non-volatile and take part in the polymerisation reaction wherein they become solids.

The mechanism of polymerisation can be free radical, cationic or both, called hybrid.

If the bleeding printing ink is to be dried by UV radiation, it should contain a photoinitiation system in order to start the polymerisation reaction. Such systems are widely known to the specialist ink manufacturer.

In a free radical induced polymerisation, photoinitiators can undergo photocleavage (Norrish type I photoinitiators) or proceed by the abstraction of hydrogen from a suitable donor (Norrish type II photoinitiators), in order to generate free radicals. The chemical reactive free radical species thus created transfer their energy to the carbon-carbon double bonds provided by the unsaturated ink binder constituents, and then the chain propagation and chain termination steps occur. It is understood that the ink binder should contain unsaturated acrylic monomers and/or oligomers which may also be modified ones.

In a cationically induced polymerisation, the photoinitiators generate ionic species initiating the polymerisation. Materials that cure by cationic mechanism include, for example, epoxides and vinyl ethers. The propagation is achieved by the attack of heterocycles under ring opening and/or vinylic carbon-carbon double bonds.

It is possible to provide a hybrid curing system, that is, curing is achieved by both free radicals and cationic mechanisms.

If the bleeding ink is to be dried by electron beam radiation, the addition of a photoinitiation system is generally not necessary.

In the bleeding printing ink of the present invention which is dried by oxypolymerisation, the solid matrix that resists chemical products is obtained from a binder system similar to that of an ink drying by oxidation. The drying mechanism is an oxidation which implies a radical induced polymerisation of unsaturated fatty chains, brought about by atmospheric oxygen. This is a chemical reaction which may be catalysed or accelerated by siccatives or dryers which should be incorporated into the printing ink formulation.

The bleeding or fugitive printing ink of this invention contains one ore more dyestuffs as agents which are sensitive to organic solvents and other chemical agents. These dyestuffs are typically the same ones as those which are normally used in known bleeding inks.

As a general rule, the binder system of the bleeding printing ink according to the present invention makes up about 40 to about 85 % by weight of the total ink weight. The dye-stuff(s), as agents that are sensible to chemical reagents, comprise typically from about 5 to about 20 % by weight of the total ink.

If the printing ink is designed to dry under UV radiation, the photoinitiator system contains an initiator and, optionally, a co-initiator. These compounds represent about 2 to about 15 % by weight of the ink.

The amount of further components of the ink, for example extenders, pigments such as TiO2 or CaCO3, stabilisers, viscosity regulators, etc., is comprised between 0 and about 15 % by weight of the printing ink.

The bleeding ink of the present invention affords the same or better level of protection on security documents than the inks already known, but comprises a binder matrix which resists the attack of organic solvents and other chemical reagents and which is obtained in a drying time duration much shorter than the known inks. Furthermore, the known bleeding inks produce printings which are not really dry and wherein the ink continues to migrate within the interstices of the fibres of the substrate. In contrast thereto, the printings obtained in using the inks of the present invention are stable, really dry and unable to migrate in or on the substrate. Still further, the present inks can be printed with excellent results on non-absorbing substrates such as plastic films.

The following Examples are given by way of explanation only and can by no means be interpreted as a limitation of the invention. In the Examples, all percentages are given by weight.

### Example 1:

A bleeding ink that dries on ultraviolet (UV) radiation was prepared for wet offset printing, and the following products were blended on a three-roller mill:

| Product | amount, parts by weight |
|---|---|
| Aliphatic urethane triacrylate | 43.0 |
| Polyester acrylate (fatty acid modified) | 10.0 |
| Glycerol propoxytriacrylate (monomer) | 12.5 |
| Hydroquinone (stabiliser) | 0.5 |
| TiO2 (pigment) | 1.0 |
| CaCO3 (pigment) | 8.0 |
| Dyestuff C.I. Solvent Blue 67 (Ciba-Geigy) | 15.0 |
| Benzophenone | 7.0 |
| Isopropyl thioxanthone | 3.0 |

Paper was printed continuously with this printing ink at a speed of 150 m/min and dried under 3 UV lamps having a total power of 240 W/cm lin.

The printed paper was tested using organic solvents and other chemical products (such as acetone and/or ethanol) immediately after printing and then 4 weeks later. The sensitivity of the dried, printed ink to bleeding and to colour fading was perfect. The tests were made as follows:

Samples having a size of 20x30 mm were cut from the printed sheets after drying. These samples were immersed during 5 minutes with intermittent stirring in different organic solvents, for example acetone, ethanol, higher boiling alcohols, trichloroethylene, etc. The samples were removed after 5 minutes and dried, and their colour was compared with the untreated paper sheet.

If a "drop text" (deposition of a drop of solvent/reagent on the print) is performed using the same solvents, bleeding is observed with a staining of the non-printed areas surrounding the printed pattern.

### Example 2:

A bleeding ink that dries by oxypolymerisation was prepared for dry and wet offset printing, and the following products were blended on a three-roller mill:

| Product | amount, parts by weight |
|---|---|
| Varnish | 40 to 60 |
| Alkyd resin (Alsynol PN 66 from DMS) | 15 to 25 |
| Dyestuff (Neopen Yellow from BASF) | 15 to 20 |
| Wax (Polytron 90 from Lawter) | 4 to 5 |
| Siccative (cobalt naphthenate) | 1 to 2 |
| Oxidation inhibitor (hydroquinone) | 0.3 to 0.5 |
| Silica (Aerosil 200 from Degussa) | 1 to 3 |

The varnish is composed of a phenolic resin (Albertol KP 648, Hoechst), a bleached linseed oil, and a mineral oil (PKWF 28/31, Haltermann).

The ink was printed on paper sheets by the offset printing process, and the printed paper was dried in open air. The drying was complete after about 24 hours. Tests with organic solvents and other chemical products were conducted on samples of the printed sheets after 24 hours and 4 weeks later. The sensitivity of the dried ink to bleeding and colour fading was excellent. The tests were made according to the method described in Example 1.

### Example 3:

A UV-drying bleeding ink for screen printing was prepared according to the following formulation:

| Product | Amounts, Parts by weight |
|---|---|
| epoxy acrylate | 15.0 |
| oligoamine glycerol propoxytriacrylate | 25.0 |
| (monomer) | 30.0 |
| dianol-diacrylate (monomer) | 15.0 |
| hydroquinone (stabiliser) | 0,5 |
| dyestuff C.I solvent blue 67 | 10.0 |
| isopropyl thioxanthone | 1.0 |
| 2-methyl-1 [4-(methylthio)phenyl]-2-morpholino-propanone-1 | 3.5 |
| anti-foaming agent | 3.0 |

The ink was printed using a flat-bed screen machine. The drop test using acetone and ethanol gave clearly visible bleeding and staining.

The security documents to be printed with the bleeding inks of the present invention can be printed, entirely with prints from the new bleeding inks of the present invention, but it is also possible to print only those locations or regions where forgery is to be expected.

## Claims

1. A bleeding printing ink for printing security documents, comprising at least one dye soluble in at least one organic solvent in a range of between 5 to 20 % by weight of the weight of the total printing ink and at least one crosslinkable printing ink binder not being selected from thermoset resins.

2. Printing ink according to claim 1 wherein said printing ink binder is selected from the group consisting of compounds which form a crosslinked binder matrix under the influence of energy radiation inducing a free radical, cationic or hybrid polymerisation mechanism.

3. Printing ink according to claim 1 wherein said printing ink binder is selected from the group consisting of compounds forming a crosslinked binder matrix by an oxypolymerisation reaction.

4. Printing ink according to claim 3 wherein the printing ink binder comprises a phenolic resin, a siccative and a drying oil.

5. Printing ink according to one of the claims 3 or 4 wherein the printing ink binder comprises at least one alkyd resin.

6. Printing ink according to claim 2 wherein the printing ink binder is selected from the group consisting of epoxy acrylates, polyester acrylates and polyurethane acrylates, said acrylates being optionally modified, epoxides, vinyl ethers and mixtures thereof.

7. Method of authenticating a document comprising the steps of
a) providing a printing ink comprising at least one dye soluble in at least one organic solvent in a range of between 5 to 20 % by weight of the weight of the total printing ink and at least one crosslinkable printing ink binder not being selected from thermoset resins,
b) applying said printing ink obtained in step a) as a layer onto a substrate,
c) drying and curing said printing ink layer obtained in step b) under the influence of energy radiation or by oxypolymerisation thus forming a crosslinked binder matrix,
d) authenticating the document by subjecting the dried and crosslinked ink layer obtained in step c) to said organic solvent of step a) and observing for movement of the dye.

8. Method according to claim 7 wherein the energy radiation is impinging ultraviolet light.

9. Method according to claim 7 wherein the energy radiation is an impinging electron beam.

10. Method according to one of the claims 7 to 9 wherein the organic solvent is acetone and/or ethanol.

11. A substrate comprising a printed ink layer printed with a printing ink according to any of the claims 1 to 6.

12. A substrate according to claim 11 wherein the thickness of the printed ink film is in the range of 1 to 4 µm.

13. A substrate according to claim 11 or 12 wherein the surface roughness of the substrate has an amplitude of at least 10 µm.

14. Use of a composition comprising at least one dye soluble in at least one organic solvent in a range of between 5 to 20 % by weight of the weight of the total printing ink and at least one crosslinkable printing ink binder not being selected from thermoset resins as a printing ink for printing security documents.

15. Use of a composition according to claim 1 wherein said printing ink binder is selected from the group consisting of compounds which form a crosslinked binder matrix under the influence of energy radiation inducing a free radical, cationic or hybrid polymerisation mechanism.

16. Use according to claim 14 wherein said printing ink binder is selected from the group consisting of compounds which form a crosslinked binder matrix by an oxypolymerisation reaction.

17. Use according to claim 16 wherein the printing ink binder comprises a phenolic resin, a siccative and a drying oil.

18. Use according to one of the claims 16 or 17 wherein the printing ink binder comprises at least one alkyd resin.

19. Use according to claim 15 wherein the printing ink binder is selected from the group consisting of epoxy acrylates, polyester acrylates and polyurethane acrylates, said acrylates being optionally modified, epoxides, vinyl ethers and mixtures thereof.

## Patentansprüche

1. Ausblutende Drucktinte zum Drucken von Sicherheitsdokumenten, enthaltend mindestens einen Farbstoff, der in mindestens einem organischen Lösungsmittel in einem Bereich von 5 bis 20 Gew.-% des Gesamtgewichts der Drucktinte löslich ist, und mindestens einen vernetzbaren Drucktinten-Binder, der nicht ausgewählt ist aus wärmehärtbaren Harzen.

2. Drucktinte nach Anspruch 1, wobei der Drucktinten-Binder aus der Gruppe ausgewählt ist, bestehend aus Verbindungen, die unter dem Einfluss von Energiestrahlung, die einen freien radikalischen, kationischen oder Hybridpolymerisations-Mechanismus induziert, eine vernetzte Binder-Matrix bilden.

3. Drucktinte nach Anspruch 1, wobei der Drucktinten-Binder aus der Gruppe ausgewählt ist, bestehend aus Verbindungen, die durch eine Oxypolymerisationsreaktion eine vernetzte Binder-Matrix bilden.

4. Drucktinte nach Anspruch 3, wobei der Drucktinten-Binder ein Phenolharz, ein Siccativ und ein trocknendes Öl aufweist.

5. Drucktinte nach einem der Ansprüche 3 oder 4, wobei der Drucktinten-Binder mindestens ein Alkydharz aufweist.

6. Drucktinte nach Anspruch 2, wobei der Drucktinten-Binder aus der Gruppe ausgewählt ist, bestehend aus Epoxyacrylaten, Polyesteracrylaten und Polyurethanacrylaten, wobei die Acrylate wahlweise modifiziert sind, Epoxiden, Vinylethern und Gemischen hiervon.

7. Verfahren zur Authentifizierung eines Dokuments, mit den Schritten:
a) Bereitstellen einer Drucktinte, die mindestens einen Farbstoff aufweist, der in mindestens einem organischen Lösungsmittel in einem Bereich von 5 bis 20 Gew.-%, bezogen auf die Gesamtdrucktinte, löslich ist, und mindestens einen vernetzbaren Drucktinten-Binder, der nicht aus wärmehärtbaren Harzen ausgewählt ist,
b) Aufbringen der unter Schritt a) erhaltenen Drucktinte als Schicht auf ein Substrat,
c) Trocknen und Aushärten der in Schritt b) erhaltenen Drucktintenschicht unter der Einwirkung von Energiestrahlung oder durch Oxypolymerisation, wodurch eine vernetzte Binder-Matrix erhalten wird,
d) Authentifizieren des Dokuments durch Behandeln der in Schritt c) erhaltenen getrockneten und vernetzten Tintenschicht mit dem organischen Lösungsmittel aus Schritt a) und Beobachten, ob eine Farbstoffbewegung auftritt.

8. Verfahren nach Anspruch 7, wobei die Energiestrahlung auftreffendes Ultraviolettlicht ist.

9. Verfahren nach Anspruch 7, wobei die Energiestrahlung ein auftreffender Elektronenstrahl ist.

10. Verfahren nach einem der Ansprüche 7 bis 9, wobei das organische Lösungsmittel Aceton und/oder Ethanol ist.

11. Substrat, das eine gedruckte Tintenschicht aufweist, die mit einer Drucktinte nach einem der Ansprüche 1 bis 6 gedruckt wurde.

12. Substrat nach Anspruch 11, wobei die Dicke der gedruckten Tintenschicht im Bereich von 1 bis 4 µm liegt.

13. Substrat nach Anspruch 11 oder 12, wobei die Oberflächenrauheit des Substrats eine Amplitude von mindestens 10 µm aufweist.

14. Verwendung einer Zusammensetzung, die mindestens einen Farbstoff aufweist, der in mindestens einem organischen Lösungsmittel in einem Bereich von 5 bis 20 Gew.-% des Gewichts der gesamten Drucktinte löslich ist, und mindestens einen vernetzbaren Drucktinten-Binder, der nicht aus wärmehärtbaren Harzen ausgewählt ist, als Drucktinte zum Drucken von Sicherheitsdokumenten.

15. Verwendung einer Zusammensetzung nach Anspruch 1, wobei der Drucktinten-Binder aus der Gruppe ausgewählt ist, bestehend aus Verbindungen, die unter dem Einfluss von Energiestrahlung, die einen freien radikalischen, kationischen oder Hybridpolymerisations-Mechanismus induziert, eine vernetzte Binder-Matrix bilden.

16. Verwendung nach Anspruch 14, wobei der Drucktinten-Binder aus der Gruppe ausgewählt ist, bestehend aus Verbindungen, die durch eine Oxypolymerisationsreaktion eine vernetzte Binder-Matrix bilden.

17. Verwendung nach Anspruch 16, wobei der Drucktinten-Binder ein Phenolharz, einen Trockenstoff und ein trocknendes Öl aufweist.

18. Verwendung nach einem der Ansprüche 16 oder 17, wobei der Drucktinten-Binder mindestens ein Alkydharz aufweist.

19. Verwendung nach Anspruch 15, wobei der Drucktinten-Binder aus der Gruppe ausgewählt ist, bestehend aus Epoxyacrylaten, Polyesteracrylaten und Polyurethanacrylaten, wobei die Acrylate wahlweise modifiziert sind, Epoxiden, Vinylethern und Gemischen hiervon.

## Revendications

1. Encre d'impression active par migration pour imprimer des documents de sécurité, comprenant au moins un colorant soluble dans au moins un solvant organique dans une plage comprise entre 5 et 20% en poids du poids de la totalité de l'encre d'impression et au moins un liant d'encre d'impression réticulable qui n'est pas sélectionné parmi des résines thermodurcies.

2. Encre d'impression selon la revendication 1, dans laquelle ledit liant d'encre d'impression est sélectionné dans le groupe constitué des composés qui forment une matrice de liant réticulée, sous l'influence d'un rayonnement énergétique induisant un mécanisme de polymérisation par radicaux libres, cationique ou hybride.

3. Encre d'impression selon la revendication 1, dans laquelle ledit liant d'encre d'impression est sélectionné dans le groupe constitué des composés formant une matrice de liant réticulée, par une réaction de polymérisation d'oxyde.

4. Encre d'impression selon la revendication 3, dans laquelle le liant d'encre d'impression comprend une résine phénolique, un agent dessiccant et une huile siccative.

5. Encre d'impression selon l'une des revendications 3 et 4, dans laquelle le liant d'encre d'impression comprend au moins une résine alkyde.

6. Encre d'impression selon la revendication 2, dans laquelle le liant d'encre d'impression est sélectionné dans le groupe constitué d'époxy-acrylates, de polyester acrylates et de polyuréthane acrylates, lesdits acrylates étant éventuellement modifiés, d'époxydes, d'éthers inyliques et de mélanges de ceux-ci.

7. Procédé d'authentification d'un document comprenant les étapes consistant à :
a) prévoir une encre d'impression comprenant au moins un colorant soluble dans au moins un solvant organique dans une plage comprise entre 5 et 20% en poids du poids de la totalité de l'encre d'impression et au moins un liant d'encre d'impression réticulable qui n'est pas sélectionné parmi des résines thermodurcies,
b) appliquer ladite encre d'impression obtenue à l'étape a) en tant que couche sur un substrat,
c) sécher et durcir ladite couche d'encre d'impression obtenue à l'étape b) sous l'influence d'un rayonnement énergétique ou par polymérisation d'oxyde, ce qui permet de former une matrice de liant réticulée,
d) authentifier le document en soumettant la couche d'encre séchée et réticulée obtenue à l'étape c) à l'action dudit solvant organique de l'étape a) et observer le mouvement du colorant.

8. Procédé selon la revendication 7, dans lequel le rayonnement énergétique est une lumière ultraviolette incidente.

9. Procédé selon la revendication 7, dans lequel le rayonnement énergétique est un faisceau d'électrons incident.

10. Procédé selon l'une des revendications 7 à 9, dans lequel le solvant organique est l'acétone et/ou l'éthanol.

11. Substrat comprenant une couche d'encre imprimée à l'aide d'une encre d'impression selon l'une quelconque des revendications 1 à 6.

12. Substrat selon la revendication 11, dans lequel l'épaisseur du film d'encre imprimé se situe dans la plage allant de 1 à 4 µm.

13. Substrat selon la revendication 11 ou 12, dans lequel la rugosité superficielle du substrat présente une grandeur d'au moins 10 µm.

14. Utilisation d'une composition comprenant au moins un colorant soluble dans au moins un solvant organique dans une plage comprise entre 5 et 20% en poids du poids de la totalité de l'encre d'impression et au moins un liant d'encre d'impression réticulable qui n'est pas sélectionné parmi des résines thermodurcies, en tant qu'encre d'impression destinée à imprimer des documents de sécurité.

15. Utilisation d'une composition selon la revendication 1, dans laquelle ledit liant d'encre d'impression est sélectionné dans le groupe constitué des composés qui forment une matrice de liant réticulée sous l'influence d'un rayonnement énergétique induisant un mécanisme de polymérisation par radicaux libres, cationique ou hybride.

16. Utilisation selon la revendication 14, dans laquelle ledit liant d'encre d'impression est sélectionné dans le groupe constitué des composés qui forment une matrice de liant réticulée par une réaction de polymérisation d'oxyde.

17. Utilisation selon la revendication 16, dans laquelle le liant d'encre d'impression comprend une résine phénolique, un agent dessiccant et une huile siccative.

18. Utilisation selon l'une des revendications 16 et 17, dans laquelle le liant d'encre d'impression comprend au moins une résine alkyde.

19. Utilisation selon la revendication 15, dans laquelle le liant d'encre d'impression est sélectionné dans le groupe constitué des époxy-acrylates, des polyester acrylates et des polyuréthane acrylates, lesdits acrylates étant éventuellement modifiés, des époxydes, des éthers vinyliques et de mélanges de ceux-ci.
